(19) Europäisches Patentamt / European Patent Office / Office européen des brevets

(11) **EP 2 624 090 B1**

(12) **EUROPÄISCHE PATENTSCHRIFT**

(45) Veröffentlichungstag und Bekanntmachung des Hinweises auf die Patenterteilung:
**03.09.2014** **Patentblatt 2014/36**

(51) Int Cl.:
***G05B 19/416*** *(2006.01)*

(21) Anmeldenummer: **12153821.9**

(22) Anmeldetag: **03.02.2012**

(54) **Verfahren zum Betrieb eines Antriebssteuerungssystems, Computerprogramm zur Implementation des Verfahrens und Computerprogramm-Produkt mit einem solchen Computerprogramm sowie Antriebssteuerungssystem**

Method for operating a drive control system, computer program for implementing the method and computer program product with such a computer program and drive control system

Procédé de fonctionnement d'un système de commande d'entraînement, programme informatique pour l'implémentation du procédé et produit de programme informatique doté d'un tel programme informatique ainsi que système d'entraînement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.08.2013** **Patentblatt 2013/32**

(73) Patentinhaber: **Siemens Aktiengesellschaft 80333 München (DE)**

(72) Erfinder:
• **Alkafafi, Loay**
**91056 Erlangen (DE)**
• **Hamm, Carsten, Dr.**
**91058 Erlangen (DE)**

(56) Entgegenhaltungen:
**EP-A1- 1 132 790** **EP-A1- 1 465 034**
**DE-A1- 10 200 680** **DE-B3-102004 059 966**
**US-A1- 2002 074 964**

**Beschreibung**

Die Erfindung betrifft ein Verfahren zum Betrieb eines Antriebssteuerungssystems sowie ein nach dem Verfahren arbeitendes Antriebssteuerungssystem und eine Implementation des Verfahrens in Form eines Computerprogramms.

Antriebssteuerungssysteme sind grundsätzlich an sich bekannt. Sie werden zum Beispiel bei Bearbeitungsmaschinen, also Werkzeugmaschinen, Robotern und dergleichen, verwendet, um deren jeweilige Bewegung zu realisieren, nämlich einzelne Achsen, die eine translatorische oder rotatorische Beweglichkeit ermöglichen.

Antriebssteuerungssysteme sind insoweit in ein im Folgenden allgemein als Strecke bezeichnetes System eingebunden, nämlich zum Beispiel in Form des Antriebssteuerungssystems mit seinem jeweiligen Antrieb und der angetriebenen Einheit. Als Antrieb kommt normalerweise ein Elektromotor zum Einsatz. Als angetriebene Einheit kommt zum Beispiel eine Werkzeugaufnahme, insbesondere mit dem jeweiligen Werkzeug, in Betracht. Unter Kontrolle des Antriebssteuerungssystems ergibt sich bei einer Werkzeugmaschine im Hinblick auf zum Beispiel eine Formgebung des jeweiligen Werkstücks eine Relativbewegung zwischen Werkzeug und Werkstück. Nachdem Antriebssteuerungssysteme überall dort zur Anwendung kommen können, wo es gilt, Bewegungen oder Bewegungsabläufe zu steuern oder zu regeln, sind all dies nur Beispiele und im Folgenden wird für die jeweils angetriebene Einheit, auf die das Antriebssteuerungssystem durch den jeweiligen Antrieb wirkt, der allgemeine Begriff Strecke oder System verwendet.

Bei technischen Systemen ist an sich bekannt, dass diese aufgrund ihrer Systemeigenschaften allzu oft schwingungsfähig sind. Beispielhaft zu nennen sind insoweit mechanisch elastische Strukturen, wie ein Riemenantrieb im Antriebstrang, oder Trägheitspendel, wie eine pendelnde Last an einem Kran, sowie mechatronische Systeme, die durch Rückführung und Regelung von Systemgrößen Schwingformen entfalten. Eine Schwingfähigkeit kann auch aufgrund elektrischer Netzwerke mit R-L-C-Kreisen resultieren.

Bei der Ansteuerung durch automatisierungstechnische Geräte, die hier und im Folgenden unter dem Oberbegriff Antriebssteuerungssystem zusammengefasst sind, prägen sich solche Schwingungen mehr oder minder, aber zumeist unerwünscht aus, zum Beispiel wenn ein kommandierter Verfahrbefehl ausgeführt wird. In den meisten technischen Systemen führen die vorherrschenden Systemeigenschaften dabei zu gedämpften Schwingungen. Zu lösen ist dennoch das grundsätzliche Problem, eine geeignete Kombination aus der Steuerung und den Steuerungsalgorithmen auf der einen Seite sowie den dynamischen Eigenschaften des technischen Systems auf der anderen Seite zu entwerfen.

Jedes schwingungsfähige mechanische System, zum Beispiel jede Achse einer Werkzeugmaschine, ist in der Regel durch mindestens eine im Folgenden auch als kritische Frequenz bezeichnete Eigenfrequenz gekennzeichnet, die bei einem Verfahrvorgang angeregt wird und sich im Lageistwert bemerkbar macht. Aus diesem Grunde ist man bestrebt, die Anregung der Mechanik zu vermeiden. An numerisch gesteuerten Werkzeugmaschinen werden zur physikalischen Begrenzung zum Beispiel einer Drehzahl auf eine maximale Drehzahl die zeitlichen Ableitungen der Bewegungsgrößen limitiert. Etabliert hat sich speziell die betragsmäßige Beschränkung des Rucks (dritte Ableitung der Position, also die zeitliche Änderung der Beschleunigung). Während Grenzwerte für weitere Bewegungsgrößen wie Geschwindigkeit und Beschleunigung aus mechanischen und elektrischen Parametern (Maximaldrehzahl, Maximalkraft) abgeleitet werden können, hat der Grenzwert für den Ruck meist keine direkte physikalische Entsprechung. Die Einstellvorschriften reduzieren sich bisweilen auf den pragmatischen Ansatz, die Grenze so weit zu reduzieren, bis die auftretenden Schwingungen unter einer tolerierbaren Schwelle liegen. Für die Geschwindigkeitsführung einer numerischen Steuerung als Beispiel für ein Antriebssteuerungssystem, zum Beispiel für eine Werkzeugmaschine, gehört demnach eine Ruckbegrenzung heutzutage zum Stand der Technik. Dabei wird genau eine Ruckgrenze festgelegt und diese wirkt bei zum Beispiel einer Werkzeugmaschine auf das komplette Teileprogramm, also auch dort, wo keine störenden Schwingungen auftreten oder diese zumindest unterhalb eines kritischen Niveaus bleiben, so dass dort eine Ruckbegrenzung an sich überflüssig ist. Damit soll eine geringere Belastung der einzelnen Achsen einer Maschine erreicht werden. Allerdings kann sich dabei die Bearbeitungszeit des jeweiligen Anwenderprogramms, zum Beispiel eines NC-Programms, mitunter und abhängig von dem jeweiligen Anwenderprogramm deutlich erhöhen. Einzelne Aspekte in dieser Hinsicht sind in der DE 10063722 C2 mit dem Titel "Ruckbegrenzung mit Adaption der Bahndynamik" sowie der DE 10200680 B4 mit dem Titel "Minimale Schwingungsanregung beim Verfahren mit Ruckbegrenzung durch Adaption von Ruckprofilen" beschrieben.

Des Weiteren ist als "Input-shaper" ein Steuerungskonzept bekannt, welches auf einer Filterlösung im Sollwertkanal einer bestehenden Steuerung basiert. Das Prinzip beruht auf der zeitlichen Verzögerung und Aufteilung der Ansteuerung gemäß der Zeitkonstante der unerwünschten Schwingung. Die mit einem ersten Anteil der Sollgröße angeregte Schwingung wird durch einen phasenrichtig aufgebrachten zweiten Teil theoretisch ausgelöscht. Dieser Ansatz hat allerdings den Nachteil, dass ein zusätzlicher Block in den Sollwertkanal eingebracht wird, der das eigentliche Signal korrigiert und verformt. Durch die Reduzierung der Dynamik wird zwar die Anregung der kritischen Frequenz unterdrückt, allerdings geht damit grundsätzlich auch eine Verzögerung, also Verlangsamung einher.

Aus der EP 1 465 034 A ist ein Steuerverfahren zur ruckbegrenzten Geschwindigkeitsführung eines bewegbaren Maschinenelementes bekannt, bei dem eine Bewegungsbahn des Maschinenelementes in unmittelbar aufeinanderfolgende interpolierbare Bewegungsabschnitte aufgelöst ist, wobei bei der Interpolation resultierende Ruckprofile gezielt derart angepasst werden, dass eine filternde Wirkung der Ruckbegrenzung als Bandsperren so beeinflusst wird, dass die Frequenzen der Bandsperren im Wesentlichen mit den Eigenfrequenzen des Maschinenelementes und/oder der Maschine oder mit einer Auswahl solcher Eigenfrequenzen zusammenfallen. Die Anpassung der Ruckprofile im Hinblick auf das gewünschte Verhalten wird dabei mit einer parameterabhängigen Formfunktion in Form einer durch den Parameter gewichteten Addition zweier parameterunabhängiger Grundfunktionen erreicht.

Eine Aufgabe der Erfindung besteht darin, ein Verfahren zum Betrieb einer Antriebssteuerung anzugeben, das die Nachteile im Stand der Technik, insbesondere einen störenden Einfluss von Schwingungen, vermeidet oder zumindest reduziert.

Diese Aufgabe wird erfindungsgemäß mit einem Verfahren mit den Merkmalen des Anspruchs 1 gelöst. Dazu ist bei einem Verfahren zum Betrieb eines Antriebssteuerungssystems, welches einen Antrieb in einer den Antrieb umfassenden Strecke gemäß einem vorgebbaren Eingangssignal w(t) ansteuert, vorgesehen, dass für die Strecke eine kritische Frequenz $f_K$ ermittelt oder vorgegeben wird, dass anhand der kritischen Frequenz $f_K$ eine Formfunktion für den Ruck bei der Ansteuerung des Antriebs so ermittelt wird, dass die Formfunktion im Frequenzbereich bei der kritischen Frequenz $f_K$ eine Nullstelle hat, und dass eine Ansteuerung des Antriebs auf Basis zumindest einer derartigen Formfunktion erfolgt, indem sich Startzeitpunkte für die oder jede Formfunktion aus einer mehrfachen Differentiation des Eingangssignals w(t) und daraus resultierenden Startzeitpunkten einzelner Ruckflächen ergeben.

Die Erfindung ist eine Weiterentwicklung der bisherigen Ruckbegrenzung. Bei der Ruckbegrenzung erfolgt - kurz gefasst - durch das Antriebssteuerungssystem eine Ansteuerung des jeweiligen Antriebs entsprechend einer Mehrzahl von Ruckflächen, deren Position sich insbesondere aufgrund einer mehrfachen Differentiation des jeweiligen Eingangssignals ergibt. In die resultierenden Startzeitpunkte/Schaltpunkte fließen auch hinterlegte Restriktionen für Geschwindigkeit und Beschleunigung ein.

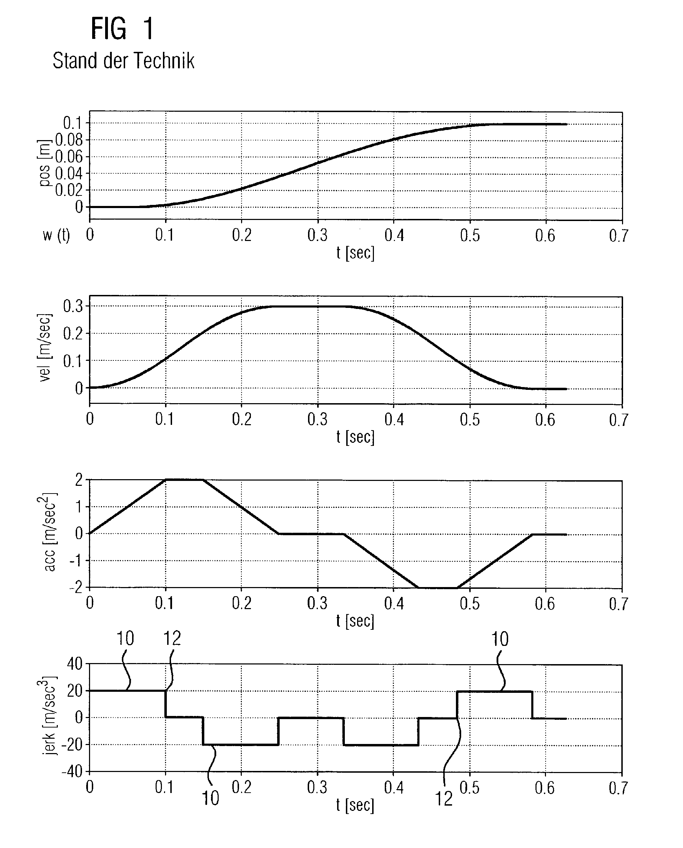

FIG 1 zeigt dazu eine graphische Darstellung. Oben ist ein exemplarisches Eingangssignal w(t) über der Zeit dargestellt. Auf der Ordinate ist eine jeweils resultierende Position in der Einheit "Meter" abgetragen. Das Eingangssignal w(t) geht demnach auf einen Verfahrbefehl zurück und beschreibt einen Verfahrvorgang, zum Beispiel das Verfahren einer Achse einer Werkzeugmaschine. In den darunter folgenden Darstellungen sind jeweils Ableitungen des Eingangssignals w(t) nach der Zeit gezeigt. Demnach zeigen diese Darstellungen die aufgrund des Eingangssignals w(t) resultierende Geschwindigkeit und die aufgrund des Eingangssignals w(t) resultierende Beschleunigung über der Zeit (vel [m/sec] bzw. acc[m/sec2]. Ganz unten ist der Ruck, also die Ableitung der resultierenden Beschleunigung über der Zeit gezeigt. Man erkennt dabei, dass sich einzelne hier und im Folgenden als Ruckflächen 10 bezeichnete Abschnitte ergeben. Bei der Ruckbegrenzung wird die Höhe dieser Ruckflächen 10 auf einen vorgegebenen oder vorgebbaren Wert beschränkt.

Wichtig für das Verständnis der Erfindung ist, dass sich aufgrund der mehrfachen Differentiation des Eingangssignals w(t) und mit den resultierenden Ruckflächen 10 Startzeitpunkte 12 dieser Ruckflächen 10 ergeben. In FIG 1 sind nur einzelne Startzeitpunkte 12 bezeichnet. Auf diese Startzeitpunkte 12 wird im Folgenden noch zurückzukommen sein.

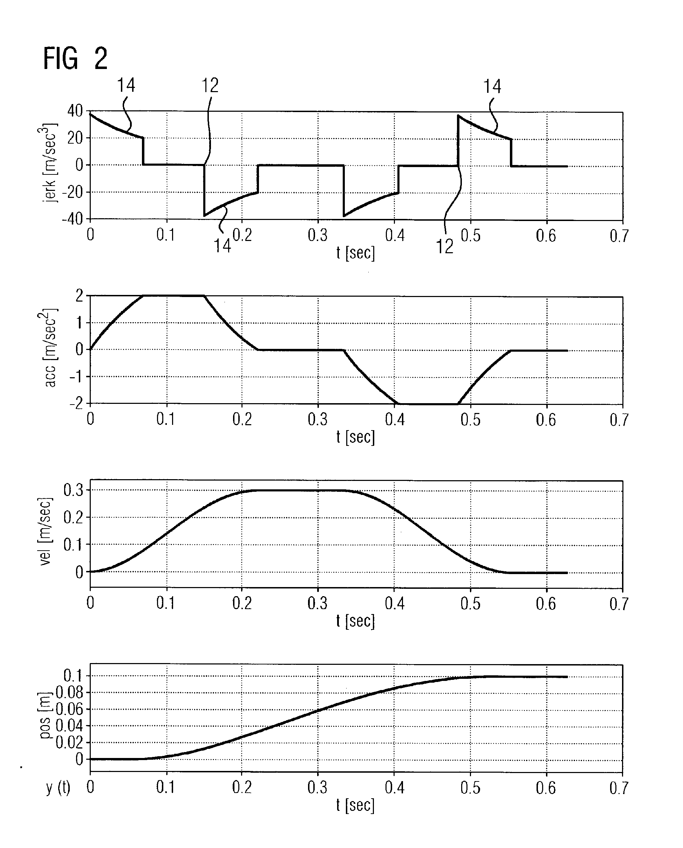

Bei dem hier vorgestellten Ansatz treten an die Stelle der bisherigen Ruckflächen 10 Flächenabschnitte, die im Folgenden als Formfunktion 14 (FIG 2) bezeichnet werden. Die Formfunktion ergibt sich, indem für die Strecke eine kritische Frequenz $f_K$ entweder automatisch ermittelt oder eine auf sonstige Art und Weise ermittelte kritische Frequenz $f_K$ vorgegeben wird. Mit der jeweiligen kritischen Frequenz $f_K$ wird die Formfunktion so ermittelt, dass diese im Frequenzbereich bei der kritischen Frequenz $f_K$ eine Nullstelle hat.

Ein Beispiel für eine solche Formfunktion 14 ist in FIG 2 gezeigt. Dort ist auch gezeigt, dass eine Ansteuerung des jeweiligen Antriebs durch die Antriebssteuerungseinheit auf Basis zumindest einer derartigen Formfunktion 14 erfolgt, indem sich Startzeitpunkte 12 für die oder jede Formfunktion 14 aus einer mehrfachen Differentiation des Eingangssignals w(t) und daraus resultierenden Startzeitpunkten 12 einzelner Ruckflächen 10 ergeben. An die Stelle der quasi willkürlich höhenbegrenzten Ruckflächen 10 tritt jeweils eine hinsichtlich ihres Verlaufs und ihrer maximalen Höhe determinierte Formfunktion 14.

Die Erfindung geht von der Erkenntnis aus, dass eine Ausprägung von Systemschwingungen durch eine geeignete Wahl des zeitlichen Signalverlaufs eines jeweiligen Eingangssignals (Sollwert) beeinflusst werden kann.

Der Vorteil der Erfindung besteht darin, dass unerwünschte Schwingungen zumindest im Umfeld der kritischen Frequenz vermieden werden.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Formfunktion ein Produkt aus einer Grundfunktion und einer Exponentialfunktion ist, ist mittels der Exponentialfunktion eine Berücksichtigung der Dämpfung möglich. Wenn die Grundfunktion so gewählt ist, dass diese ein Rechteck beschreibt, ergeben sich mathematisch vergleichsweise einfache Verhältnisse. Grundsätzlich kommt als Grundfunktion jede Funktion in Betracht, also zum Beispiel ein Dreieck, ein Sägezahn, und so weiter.

Eine Breite der Formfunktion ist umgekehrt proportional zur kritischen Frequenz. Dies darf allerdings nicht mit einer solchen Proportionalität bei den Ruckflächen der DE10063722C2 verwechselt werden, denn dort sind die bestimmenden Faktoren der Ruckflächen einerseits eine aufgrund der Ruckbegrenzung beschränkte Höhe und andererseits die mit der kritischen Frequenz korrelierte Breite, ohne dass der Ruckfläche eine Grundfunktion, die im Frequenzbereich bei der kritischen Frequenz eine Nullstelle hat, zugrunde gelegen hätte.

Die oben genannte Aufgabe wird auch mit einem Antriebssteuerungssystem gelöst, das nach einem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch ein Antriebssteuerungssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1   eine Darstellung einer mehrfachen Differentiation eines Eingangssignals w(t) zum Erhalt von Ruckflächen und Startzeitpunkten für solche Ruckflächen,

FIG 2   eine Darstellung von Formfunktionen anstelle von Ruckflächen und eine bei Verwendung der Formfunktion zu den jeweiligen Startzeitpunkten resultierende, modifiziertes Bewegungsprofil y(t),

FIG 3   einen Bestückungsautomaten als Beispiel für eine Bearbeitungsmaschine, der für Steuerung gemäß einem Verfahren wie hier beschrieben in Betracht kommt und Antriebssteuerungssystem dafür ein entsprechendes Antriebssteuerungssystem aufweist,

FIG 4   eine Darstellung einer möglichen Grundfunktion h(t) für eine Formfunktion im Frequenzbereich,

FIG 5   simulierte, resultierende Verläufe für die Positionsistwerte bei einem Verfahrbefehl und zwar einmal nach einem im Stand der Technik bekannten Verfahren (Ruckbegrenzung) und einmal nach dem hier beschriebenen Verfahren,

FIG 6   ein Simulationsmodell mit der hier vorgeschlagenen Verarbeitung der Sollwerte und

FIG 7   ein schematisch vereinfachtes Flussdiagramm als Darstellung einer Grundlage für eine mögliche Implementation des hier beschriebenen Verfahrens in Form eines Steuerungsprogramms.

Zur Vermeidung von Wiederholungen wird auf die bereits in der Beschreibungseinleitung erläuterten Figuren und die dort gezeigten Ruckflächen 10 (FIG 1) und Startzeitpunkte 12 (FIG 1) sowie die Formfunktion 14 (FIG 2) Bezug genommen.

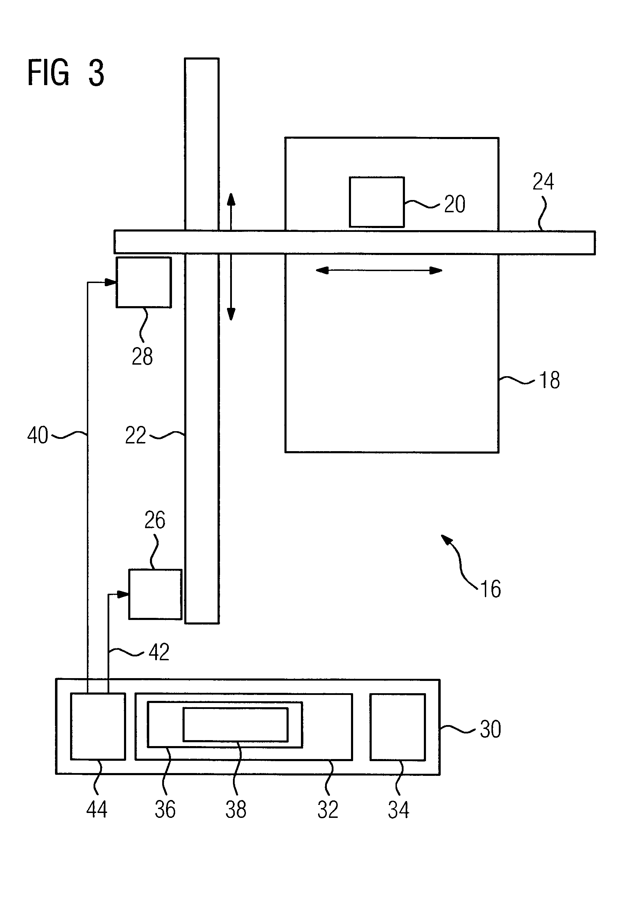

Zunächst zeigt allerdings FIG 3 als Beispiel für eine Bearbeitungs- oder Werkzeugmaschine 16 einen schematisch vereinfachten Bestückungsautomaten zum Bestücken einer Leiterplatte 18 mit elektronischen Bauteilen. Der Bestückungsautomat erlaubt Bewegungen eines Werkzeugs 20, nämlich eines Bestückungskopfs, in x- und in y-Richtung (jeweils durch die Doppelpfeile zusätzlich verdeutlicht). Bei derartigen, unabhängigen Bewegungsmöglichkeiten spricht man bei Bearbeitungsmaschinen 16 jeweils von einem Freiheitsgrad. Hier handelt es sich um zwei translatorische Freiheitsgrade. Genauso können bei einer Bearbeitungsmaschine 16 zusätzlich oder alternativ ein oder mehrere rotatorische Freiheitsgrade realisiert sein.

Eine übliche Bezeichnung eines Freiheitsgrads einer Bearbeitungsmaschine 16 ist der Begriff Achse und entsprechend wird hier auf die beiden Freiheitsgrade der dargestellten Bearbeitungsmaschine 16 als erste und zweite Achse 22, 24 Bezug genommen. Jede Achse 22, 24 wird mit einem Motor angetrieben, indem dieser im dargestellten Ausführungsbeispiel zum Beispiel auf einen Treibriemen oder eine Spindel wirkt. Der jeweilige Motor und ein eventuell notwendiges Getriebe werden als Antrieb 26, 28 bezeichnet. Jeder Antrieb 26, 28 wird von einem Antriebssteuerungssystem 30 angesteuert, wobei ein und dasselbe Antriebssteuerungssystem 30 - wie hier dargestellt - auch mehrere Antriebe 26, 28 ansteuern kann.

Das Antriebssteuerungssystem 30 umfasst einen Speicher 32 und zumindest eine Verarbeitungseinheit 34 in Form von oder nach Art eines Mikroprozessors. In den Speicher 32 ist ein Steuerungsprogramm 36 geladen, das im Betrieb des Antriebssteuerungssystems 30 durch die jeweilige Verarbeitungseinheit 34 ausgeführt wird. Das Steuerungsprogramm 36 umfasst dafür eine Softwareimplementation eines oder mehrerer Steuerungsalgorithmen 38. Unter Kontrolle des Steuerungsprogramms 36 werden Ausgangssignale 40, 42 zur Ansteuerung des jeweiligen Antriebs 26, 28 ermittelt und zum Beispiel über eine Antriebsregelungseinheit 44 ausgegeben.

Bei bisherigen Ansätzen basieren diese Ausgangssignale 40, 42 zum Beispiel auf in ihrer Höhe begrenzten Ruckflächen, wie in FIG 1 gezeigt. Bei der Wahl eines entsprechenden Grenzwerts (Ruckgrenze) wird allerdings häufig eine sichere Seite und entsprechend eine vergleichsweise niedrige Ruckgrenze gewählt, was insgesamt zu langsameren Bewegungen führt als dies eventuell notwendig wäre. Prinzipbedingt ist mit einer solchen Ruckbegrenzung zudem nur die Einhaltung der Überschwinggrenze für das entworfene Bewegungsprofil und - im günstigen Fall - gleichartige Bewegungsprofile gesichert. Andere Verfahrbefehle können bei gleichen Dynamikparametern die Überschwinggrenze verletzen. Durch den Einsatz der Ruckbegrenzung werden die Sollwerte einer Achse zwar geglättet, eine Anregung kritischer Frequenzen kann jedoch nicht gezielt unterdrückt werden.

Die Lösung des Problems gelingt mit dem Zusammenführen der für die Generierung der Bewegung notwendigen Informationen im Antriebssteuerungssystem 30. Wenn in den oder jeden Steuerungsalgorithmus die relevanten Eigenschaften des zu steuernden Systems, also der Strecke, eingehen, können diese berücksichtigt werden, um die Sollwertgenerierung vorteilhaft zu gestalten. Als Strecke wird jeweils ein Antrieb 26, 28 und die oder jede mit dem Antrieb 26, 28 beeinflusste Einheit aufgefasst. Bei der Steuerung des zweiten Antriebs 28 gemäß FIG 3 gehört zur Strecke der Antrieb 28 selbst, die angetriebene Achse 24 und das jeweilige Werkzeug 20 in der Werkzeugaufnahme. Bei der Steuerung des ersten Antriebs 26 gemäß FIG 3 gehört zur Strecke der Antrieb 26 selbst, die angetriebene Achse 22 und die ebenfalls mitbewegte zweite Achse 24 mit deren Aggregaten, nämlich Antrieb 28 und Werkzeug 20/Werkzeugaufnahme.

Das grundlegende Prinzip wird im Folgenden beispielhaft an einem gedämpften schwingungsfähigen System 2. Ordnung hergeleitet.

Die Differentialgleichung

$$\ddot{x}(t) + 2d\omega_0\dot{x}(t) + \omega_0^2 x(t) = \omega_0^2 u(t)$$

beschreibe das dynamische Verhalten einer Strecke der oben genannten Art zwischen einem als Systemeingang fungierenden Eingangssignal u(t) und dem resultierenden Systemausgang x(t). Im Bildbereich der Laplace-Transformation ergibt sich folgende Übertragungsfunktion:

$$X(s) = \frac{\omega_0^2}{s^2 + 2d\omega_0 s + \omega_0^2} U(s)$$

Der Steuervorgang über das Eingangssignal u(t) sei zeitlich endlich, so dass gilt:

$$u(t) = 0 \qquad \text{für} \quad t > T_0.$$

Das System führt ab dem Zeitpunkte t=$T_0$ eine freie Schwingung (Restschwingung) gemäß

$$x_r(t) = e^{-\alpha t} A \sin(\omega_d t + \phi)$$

aus, mit

$$\alpha = d\omega_0$$

$$A = \sqrt{\left(\frac{\dot{x}(T_0)}{\omega_0} + dx(T_0)\right)^2 + \left(1 - d^2\right)x^2(T_0)}$$

$$\omega_d = \omega_0 \sqrt{1 - d^2}$$

und

$$\phi = \arctan\left(\frac{x(T_0)\omega_d}{d\omega_0 x(T_0) + \dot{x}(T_0)}\right).$$

Dabei sind die Startwerte der verbleibenden Restschwingung $x_r(t)$ durch die Systemzustände zum Zeitpunkt $t=T_0$ gegeben.

Zunächst interessiert der Wert der Amplitude A der für $\alpha > 0$ exponentiell abklingenden Schwingung. Dieser hängt maßgeblich von dem zeitlichen Verlauf des Eingangssignals u(t) während des Steuervorgangs, also für $0<t<T_0$, ab.

Nach dem Faltungssatz errechnet sich der Systemausgang x(t) zu einem beliebigen Zeitpunkt t aus dem gegebenen Zeitverlauf des Eingangssignals u(t) und der Systemcharakteristik (Faltungskern) als:

$$x(t) = \frac{\omega_0^2}{\omega_d} \int_0^t e^{-\alpha(t-\tau)} \sin(\omega_d(t - \tau)) u(\tau) d\tau.$$

Für die zeitliche Ableitung von x(t) gilt Entsprechendes. Für den Wert der Amplitude A ergibt sich sodann

$$A = \sqrt{\left(\frac{\dot{x}(T_0)}{\omega_0} + dx(T_0)\right)^2 + \left(1 - d^2\right)x^2(T_0)} = \omega_0 e^{-\alpha T_0} |U_e(\omega_d)| ,$$

wobei $U_e(\omega)$ die Fourier-Transformierte der Zeitfunktion

$$u_e(t) = e^{\alpha t} u(t)$$

ist.

Hieraus kann abgeleitet werden, dass die Restschwingung $x_r$ (t) identisch verschwindet, wenn das Spektrum der Funktion $u_e$ (t) für die relevante, kritische Frequenz $\omega_d$ eine Nullstelle aufweist:

$$U_e(\omega_d) = 0 \implies A = 0 \implies x_r(t) = 0 \,.$$

Im Folgenden wird ausgeführt, wie basierend auf dieser Erkenntnis Eingangsfunktionen gebildet werden können, die auf die ausgeführte Weise eine Anregung der kritischen Frequenz vermeiden. Dafür wird aus der gedämpften kritischen Frequenz (Eigenfrequenz) $\omega_d$ und einer Grundfunktion h(t) eine hier und im Folgenden als Formfunktion g(t) bezeichnete Filterfunktion ermittelt, wobei die Grundfunktion h(t) im Frequenzbereich bei der kritischen Frequenz $\omega_d$ eine Nullstelle hat:

$$g(t) = e^{-\alpha t} h(t) \,.$$

Dabei gelten

die Normierungsbedingung $\int_0^{\infty} g(t)dt = 1$

und die Frequenzbedingung $|H(\omega_d)|=0$

mit $h(t) = e^{\alpha t}g(t)$.

Die Formfunktion g(t) eliminiert die Restschwingung $x_r$ (t) und kann zur Bildung beliebiger Bewegungsprofile und beliebig zusammengesetzter Eingangssignale w(t), Eingangssignale, die als Verfahrbefehle oder dergleichen fungieren, angewandt werden.

Mit einem Algorithmus wie hier offenbart können für ein schwingfähiges technisches System auf Seiten des Antriebssteuerungssystems 30 Sollwertverläufe - also quasi ein modifiziertes Bewegungsprofil y(t) (FIG 2) auf Basis des ursprünglichen Eingangssignals w(t) (FIG 1) - generiert werden, die die potentiell möglichen Schwingformen von vornherein nicht anregen.

Für die Anwendung des hier beschriebenen Ansatzes ist Systemwissen erforderlich, nämlich die Kenntnis der dynamischen Eigenschaften des technischen Systems (z.B. Eigenwerte und Eigenformen), das Verständnis über das Verhalten im geschlossenen Regelkreis (z.B. Systemdynamik nach Reglersynthese) sowie die Kenntnis über die Grenzwerte der dynamischen Größen (z.B. Geschwingigkeit und Beschleunigung) und weiter über die Referenztrajektorie (z. B. Sollbewegung).

Das Antriebssteuerungssystem 30 und ein dort vorgehaltenes Steuerungsprogramm 36 sind die Komponenten im Gesamtsystem, bei der diese Informationen zusammenlaufen. Über Inbetriebnahme-, Mess- und Diagnose-Funktionen können die dynamischen Parameter, insbesondere die kritische Frequenz $f_K$ bzw. $\omega_d$ der offenen oder der geregelten Strecke erfasst und gespeichert werden. Das Antriebssteuerungssystem 30 wirkt über weitere Komponenten (z. B. die Antriebsregelung 44) auf das jeweilige technische System, also zum Beispiel die jeweilige Achse 22, 24 der Bearbeitungsmaschine 16, ein. Die Steuerungsprojektierung enthält die relevanten Parameter als Maschinendaten und die Sollbewegung und ein oder mehrere zugrunde liegende Eingangsfunktionen w(t) ergeben sich aus dem jeweiligen Anwender- oder NC-Programm.

Die integrierten Möglichkeiten der Steuerung ermöglichen so die vorteilhafte Nutzung des beschriebenen Verfahrens von einer zentralen Plattform aus.

Die in FIG 1 und FIG 2 gezeigten Graphen basieren auf einem Simulationsmodell für ein schwingungsfähiges System, das bei $f_K$ = 14Hz eine kritische Eigenfrequenz besitzt und das einen Positioniervorgang von einhundert Millimetern ausführen soll. Der Positioniervorgang ist zum Beispiel das Verfahren der ersten Achse 22 der Bearbeitungsmaschine 16 gemäß FIG 3 um einhundert Millimeter.

FIG 1 zeigt die sich ergebenden Verhältnisse nach dem Stand der Technik, wenn nämlich der Ansatz der Ruckbegrenzung zugrunde gelegt wird. FIG 2 zeigt die resultierenden Verhältnisse entsprechend dem hier vorgestellten Ansatz.

Man erkennt die spezielle Gestalt der anstelle der Ruckflächen 10 (FIG 1) zugrunde gelegten Formfunktion 14.

Die hierzu gewählte Formfunktion g(t) ist aus einer rechteckigen Grundfunktion und einem exponentiellen Anteil gebildet:

$$g(t) = \begin{cases} \beta e^{-\alpha t} & 0 \leq t \leq T_j \\ 0 & sonst \end{cases} \quad \text{mit} \quad \beta = \frac{\alpha}{1 - e^{-\alpha T_j}} \quad \text{und} \quad T_j = \frac{2\pi}{\omega_d} .$$

Die Grundfunktion h(t) beschreibt demnach ein Rechteck der Höhe $\beta$ und der Breite $T_j$. Diese Breite ist wiederum abhängig von der kritischen Frequenz $\omega_d$, so dass die Breite der Grundfunktion h(t) direkt mit der kritischen Frequenz $\omega_d$ korreliert ist.

Man erkennt die rechteckige Grundfunktion beim Vergleich der Ruckflächen 10 in FIG 1 mit der jeweiligen Formfunktion 14 in FIG 2, denn eine wirksame Höhe der rechteckigen Grundfunktion der Formfunktion 14 entspricht in etwa der Höhe der Ruckfläche 10. Der gesamte Flächeninhalt unter einer Ruckfläche 10 einerseits und unter einer Formfunktion 14 andererseits ist jeweils gleich, so dass sich zumindest betragsmäßig auf Basis einer Ruckfläche 10 wie auch auf Basis einer Formfunktion eine gleiche Beschleunigung einstellt.

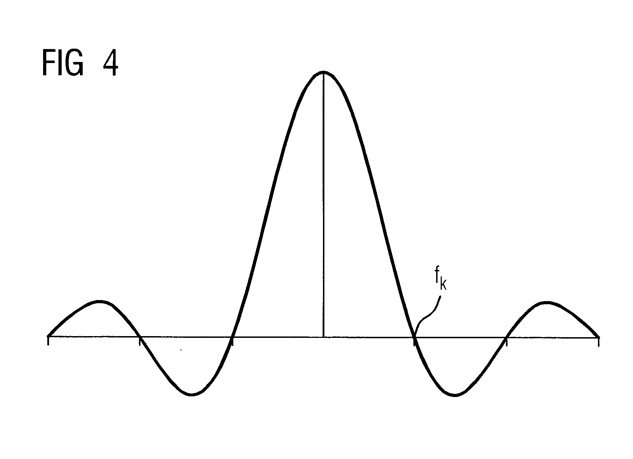

Im Frequenzbereich ist die Grundfunktion h(t) eine sogenannte sinc-Funktion (sin(f)/f) und ein Verlauf einer solchen Funktion ist exemplarisch in FIG 4 gezeigt. Man erkennt, dass die sinc-Funktion periodisch auftretende Nullstellen, zum Beispiel eine Nullstelle bei $f_K$, aufweist. Zur Auslöschung der Restschwingung $x_r$ (t) wird die Grundfunktion h(t) so gewählt, dass diese im Frequenzbereich bei der kritischen Frequenz $f_K$ eine Nullstelle hat. Ein aufbauend auf der Formfunktion g(t), die sich als Produkt der Grundfunktion h(t) und einer Exponentialfunktion darstellt (siehe oben), gebildetes Bewegungsprofil y(t) enthält keinen kritischen Spektralanteil und bildet somit im Antwortsignal der Strecke keine Restschwingung aus.

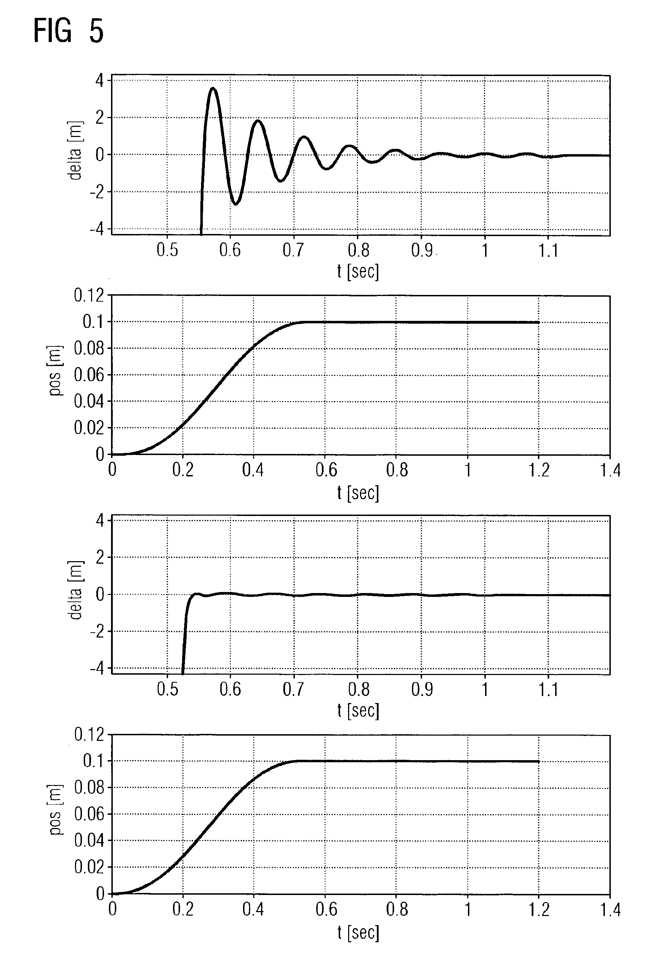

FIG 5 zeigt simulierte, resultierende Verläufe für die Istwerte der Position und zwar in den beiden oberen Darstellungen bei Anwendung des Ansatzes der Ruckbegrenzung und in den beiden unteren Darstellungen bei Anwendung des hier vorgestellten Ansatzes. Man erkennt, dass die sich auf Basis des neu vorgestellten Verfahrens ergebenden Istwerte trotz höherer Werte für den Ruck (vergleiche untere Darstellung in FIG 1 und obere Darstellung in FIG 2) keine Schwingneigung aufweisen.

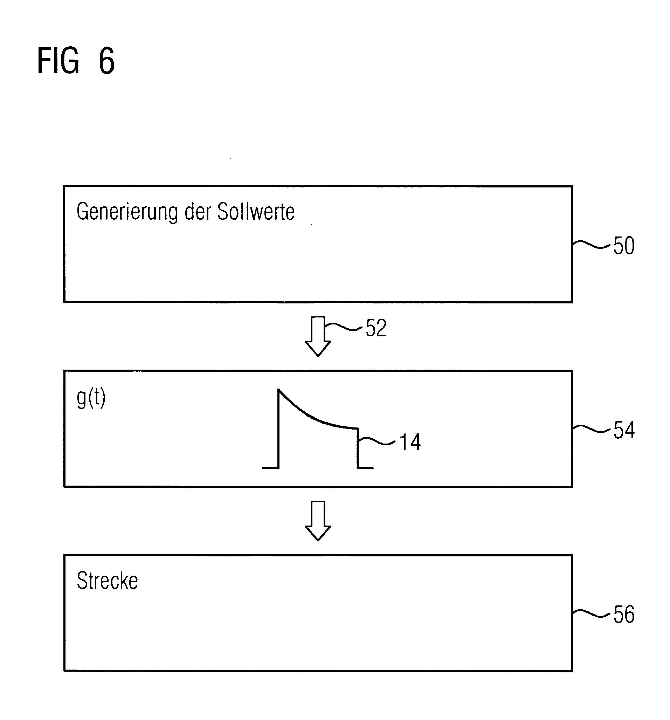

FIG 6 zeigt ein Simulationsmodell mit der hier vorgeschlagenen Verarbeitung der Sollwerte. In einem Sollwertegenerator 50 erfolgt eine Generierung von Sollwerten. Sollwerte sind Positionsinformationen, also zum Beispiel Stützstellen auf einer von der Bearbeitungsmaschine 16 abzufahrenden Trajektorie. Aus solchen Stützstellen kann sich ergeben, dass ausgehend von einer momentanen Position zum Erreichen einer nächstfolgenden Position ein Positioniervorgang wie oben beschrieben von zum Beispiel einhundert Millimetern oder dergleichen erforderlich ist. Das jeweilige Anwenderprogramm umfasst also die Trajektorie und daraus ergeben sich für einzelne Abschnitte der Trajektorie die jeweiligen Sollwerte, also Verfahrbefehle für einzelne oder mehrere Achsen 22, 24. Der oder jeder Sollwert 52 (mehrere Sollwerte 52 bei mehreren zum Erreichen eines nächsten Stützpunkts auf der Trajektorie zu bewegenden Achsen 22, 24) wird in ein Eingangssignal w(t) umgesetzt, zum Beispiel ein Eingangssignal, wie in FIG 1 in der oberen Darstellung gezeigt. Anschließend wird in einem Funktionsgenerator 54 die Formfunktion g(t) generiert, die auf einer Grundfunktion h(t) basiert, die im Frequenzbereich bei der kritischen Frequenz $f_K$ eine Nullstelle hat. Die im Zeitbereich zugehörige Formfunktion 14 ist zur Verdeutlichung ebenfalls gezeigt. Die Verwendung der Formfunktion 14 anstelle der bisherigen Ruckflächen 10 fungiert nämlich als Filter, indem genau die Anregung der jeweiligen Strecke 56 mit deren kritischer Frequenz $f_K$ vermieden wird. Die jeweilige Formfunktion 14 wird jeweils an den sich nach mehrfacher Differentiation des ursprünglichen Eingangssignals w(t) ergebenden Startpunkten 12 angewendet. Je nach Ausgestaltung des Antriebssteuerungssystems 30 kann diesem direkt zu jedem Startpunkt 12 die Formfunktion 14 zur Vorgabe des jeweiligen Rucks eingeprägt werden. Bei Ausführungsformen eines Antriebssteuerungssystems 30, die eine Ruckvorgabe nicht vorsehen, erfolgt eine ggf. mehrfache Integration der Formfunktion 14, um dem Antriebssteuerungssystem 30 zu den jeweiligen Startpunkten 12 Vorgaben für eine Beschleunigung oder Geschwindigkeit der jeweils zu bewegenden Achse 22, 24 einzuprägen.

Im Ergebnis wird die Strecke 56, also zum Beispiel die erste Achse 22 der Bearbeitungsmaschine 16 gemäß FIG 3, mit entsprechenden Vorgaben für Ruck, Beschleunigung oder Geschwindigkeit beaufschlagt, wie dies in FIG 2 gezeigt ist. Hinsichtlich des Verfahrvorgangs ergibt sich das Bewegungsprofil y(t), wie dieses in FIG 2 in der unteren Darstellung gezeigt ist, das über Ausgangssignale 40, 42 dem jeweiligen Antrieb 26, 28 eingeprägt wird.

Einzelne im Vordergrund stehende Aspekte der hier eingereichten Beschreibung lassen sich damit wie folgt zusammenfassen:

Der neu vorgestellte Ansatz basiert auf der Verwendung von Formfunktionen 14 zur Vorgabe des jeweiligen Rucks. Bisher hat man Ruckflächen 10 mit einer vorgegebenen, maximalen Höhe (Ruckbegrenzung) verwendet und eine Zeitdauer für den Ruck ergab sich aus dem Ziel, die maximale Beschleunigung möglichst schnell zu erreichen. Hier wird zur Vermeidung von Schwingungen anders vorgegangen. Es hat sich nämlich gezeigt, dass Schwingungen im System unterdrückt werden können, wenn der dem Antriebssteuerungssystem 30 eingeprägte Ruck einer vorgegebenen Formfunktion 14 folgt und diese Formfunktion 14 auf einer Grundfunktion h(t) basiert, die im Frequenzbereich eine Nullstelle bei derjenigen Frequenz $f_K$ (kritische Frequenz) hat, deren Anregung man im System vermeiden will.

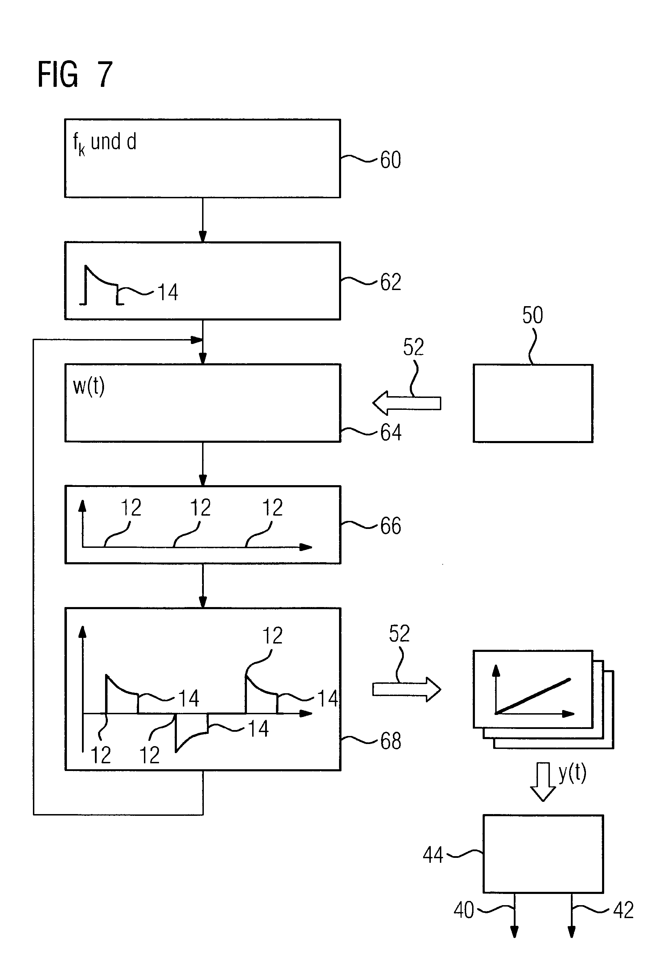

Dies wird anhand eines Flussdiagramms als schematisch vereinfachte Darstellung eines Steuerungsprogramms 36 (FIG 3) für ein Antriebssteuerungssystem 30 nochmals anhand von FIG 7 erläutert.

Danach wird zur Vermeidung solcher Schwingungen zunächst die jeweilige Strecke 56 analysiert und in einem ersten Funktionsblock 60 deren kritische Frequenz $f_K$ und ggf. deren Dämpfung d entweder automatisch vom Antriebssteuerungssystem 30 ermittelt oder es wird durch das Antriebssteuerungssystem 30 ein zum Beispiel empirisch abgeleiteter Wert für die kritische Frequenz $f_K$ eingelesen.

In einem zweiten Funktionsblock 62 wird für diese kritische Frequenz $f_K$ eine Formfunktion g(t) 14 ermittelt, deren Grundform/Grundfunktion h(t) im Frequenzbereich/Bildbereich bei eben dieser kritischen Frequenz $f_K$ eine Nullstelle hat. Im Zeitbereich ist diese Formfunktion 14 eine Fläche mit einer rechteckigen Hüllkontur, deren Breite umgekehrt proportional zur ermittelten kritischen Frequenz $f_K$ des Systems ist und die bei einem Spitzenwert startet und dann exponentiell abklingt.

Die so bestimmte Formfunktion 14 ist für die jeweilige Strecke 56 charakteristisch und vermeidet deren Anregung mit der jeweiligen kritischen Frequenz $f_K$.

In einem dritten Funktionsblock 64 werden von einem Sollwertgenerator 50 (FIG 6) erhältliche Sollwerte 52 zur Ableitung eines Eingangssignals w(t) verarbeitet.

In einem vierten Funktionsblock 66 wird das resultierende Eingangssignal w(t) mehrfach differenziert, um die Startpunkte 12 der Ruckflächen 10 zu erhalten. Die Ruckflächen 10 selbst sind unbeachtlich und es kommt lediglich auf deren Startpunkte 12 an.

In einem fünften Funktionsblock 68 wird durch das Antriebssteuerungssystem 30 der Antriebsregelungseinheit 44 ab jedem Startpunkt 12 ein Ruck entsprechend der jeweiligen Formfunktion 14 eingeprägt. Die Zeitpunkte für das Einprägen der Formfunktionen 14 entsprechen somit exakt den Zeitpunkten, an denen zuvor bei der Ruckbegrenzung der vorgegebene Ruck eingeprägt wurde. Die Dauer der Formfunktion 14 kann allerdings unterschiedlich zu dem bisher eingeprägten Ruck vorgegebener Höhe sein. Die Antriebsregelungseinheit 44 wirkt direkt auf die jeweilige Strecke 56 und bewirkt zum Beispiel einen durch den jeweiligen Sollwert 52 vorgegebenen Verfahrvorgang. Die oder jede Formfunktion 14 wird an der jetzt festgelegten Position einer dreifachen Integration (veranschaulicht durch drei Integratoren) unterworfen und das Ergebnis ist das Bewegungsprofil y(t), das über Ausgangssignale 40, 42 dem jeweiligen Antrieb 26, 28 (FIG 3) eingeprägt wird.

Für weitere Sollwerte 52 wird vor den dritten Funktionsblock 64 verzweigt, um einen neuen Sollwert abzurufen. Dann wird das Verfahren mit einer erneuten Ausführung des dritten, vierten und fünften Funktionsblocks 64, 66, 68 fortgesetzt, so lange, bis alle Sollwerte 52 abgearbeitet sind.

Wenn die resultierende Formfunktion 14 einen maximalen Grenzwert hinsichtlich der Höhe des Rucks überschreitet, kann auch vorgesehen sein, dass bei gleichbleibender Fläche die Höhe der Formfunktion 14 reduziert wird, indem deren Breite erhöht wird. Die Breite der Formfunktion 14 ist umgekehrt proportional zur kritischen Frequenz $f_K$. Die Auslöschung der Anregung kritischer Frequenzen $f_K$ ergibt sich jedoch auch, wenn die Formfunktion im Bildbereich (Frequenzbereich) eine Nullstelle höherer Ordnung bei der kritischen Frequenz aufweist. Dies führt dann dazu, dass eine erste Nullstelle der Formfunktion 14 bei geringeren Frequenzen auftritt und entsprechend der umgekehrten Proportionalität von dieser ersten Nullstelle und der Breite $Tj = 2\pi/\omega_d = 1/f_K$ der Formfunktion 14 bei einer kleineren kritischen Frequenz $f_K$ damit die Breite der Formfunktion 14 immer größer wird.

Wenn sich auf diese Weise durch erhöhte Breiten oder auch ohne erhöhte Breiten aufgrund nahe beieinander liegender Startpunkte 12 zwei oder mehr Formfunktionen 14 überlappen, stellt dies kein Problem dar und es kommt schlicht zu einer Addition der jeweiligen Funktionswerte.

Abschließend ist darauf hinzuweisen, dass der hier vorgestellte Ansatz grundsätzlich für alle Arten schwingfähiger Systeme verwendbar ist, insbesondere für allgemeine mechanische oder mechatronische sowie elektrische, schwingfähiges Systeme, wobei das hier beschriebene Antriebssteuerungssystem ein Beispiel für ein mechatronisches System und ein elektrischer Schwingkreise ein Beispiel für ein elektrisches System ist. Allgemeiner formuliert lässt sich damit das hier vorgestellte Verfahren auch als Verfahren zum Betrieb eines schwingfähigen Systems oder als Verfahren zur Vermeidung von Schwingungen eines schwingfähigen Systems beschreiben, das gemäß einem vorgebbaren Eingangssignal w(t) angesteuert wird, wobei für das System eine kritische Frequenz $f_K$ und ggf. eine Dämpfung ermittelt oder vorgegeben wird, wobei anhand der kritischen Frequenz $f_K$ eine Formfunktion 14 für den Ruck bei der Ansteuerung des Systems so ermittelt wird, dass die Formfunktion 14 auf einer Grundfunktion basiert, die im Frequenzbereich bei der kritischen Frequenz $f_K$ eine Nullstelle hat, und dass eine Ansteuerung des Systems auf Basis zumindest einer derartigen Formfunktion 14 erfolgt, indem sich Startzeitpunkte 12 für die oder jede Formfunktion 14 aus einer mehrfachen Differentiation des Eingangssignals w(t) und daraus resultierenden Startzeitpunkten 12 einzelner Ruckflächen 10 ergeben.

**Patentansprüche**

1. Verfahren zum Betrieb eines Antriebssteuerungssystems (30),
   das einen Antrieb (26, 28) in einer den Antrieb (26, 28) umfassenden Strecke (56) gemäß einem vorgebbaren Eingangssignal (w(t)) ansteuert,
   wobei für die Strecke (56) eine kritische Frequenz ($f_K$) ermittelt oder vorgegeben wird,
   **dadurch gekennzeichnet,**
   **dass** anhand der kritischen Frequenz ($f_K$) eine Formfunktion (14) für den Ruck bei der Ansteuerung des Antriebs (26, 28) so ermittelt wird,
   **dass** die Formfunktion (14) auf einer Grundfunktion h(t) basiert, die im Frequenzbereich bei der kritischen Frequenz ($f_K$) eine Nullstelle hat,
   **dass** die Formfunktion (14) ein Produkt aus einer Grundfunktion und einer Exponentialfunktion ist und
   **dass** eine Ansteuerung des Antriebs (26, 28) auf Basis zumindest einer derartigen Formfunktion (14) erfolgt, indem sich Startzeitpunkte (12) für die oder jede Formfunktion (14) aus einer mehrfachen Differentiation des Eingangssignals (w(t)) und daraus resultierenden Startzeitpunkten (12) einzelner Ruckflächen (10) ergeben.

2. Verfahren nach Anspruch 1, wobei die Grundfunktion ein Rechteck beschreibt.

3. Verfahren nach Anspruch 1 oder 2, wobei eine Breite der Grundfunktion und eine Breite der Formfunktion (14) umgekehrt proportional zur kritischen Frequenz ($f_K$) ist.

4. Verfahren nach Anspruch 1, 2 oder 3, wobei das Antriebssteuerungssystem (30) die kritische Frequenz ($f_K$) automatisch ermittelt.

5. Verfahren nach einem der vorangehenden Ansprüche, wobei anhand von Sollwerten (52) eines Anwenderprogramms Eingangssignale w(t) und für diese durch mehrfache Differentiation Startzeitpunkte (12) für die Formfunktionen (14) ermittelt werden und wobei die Formfunktionen (14) ab ihren jeweiligen Startzeitpunkten (12) zur Ansteuerung des Antriebs (26, 28) verwendet werden.

6. Verfahren nach Anspruch 5, wobei bei einer Überschreitung von Ruckobergrenzen eine Höhe der Formfunktion (14) reduziert wird, indem die Formfunktion (14) so gewählt wird, dass diese auf einer Grundfunktion h(t) basiert, die im Frequenzbereich bei der kritischen Frequenz ($f_K$) eine Nullstelle höherer Ordnung hat.

7. Computerprogramm mit Programmcode-Mitteln, um alle Schritte von jedem beliebigen der Ansprüche 1 bis 6 durchzuführen, wenn das Programm auf einem Steuergerät für eine Brennkraftmaschine ausgeführt wird.

8. Computerprogrammprodukt mit Programmcode-Mitteln, die auf einem computerlesbaren Datenträger gespeichert sind, um das Verfahren nach jedem beliebigen der Ansprüche 1 bis 6 durchzuführen, wenn das Computerprogrammprodukt durch ein Antriebssteuerungssystem (30) für eine Bearbeitungsmaschine (16) ausgeführt wird.

9. Antriebssteuerungssystem (30) für eine Bearbeitungsmaschine (16) mit einer Verarbeitungseinheit (34) und einem Speicher (32), in den als Steuerungsprogramm (36) ein Computerprogramm nach Anspruch 7 geladen ist, das im Betrieb des Antriebssteuerungssystems (30) durch die Verarbeitungseinheit (34) ausgeführt wird.

**Claims**

1. Method for operating a drive control system (30),
   which activates a drive (26, 28) in a path (56) including the drive (26, 28) in accordance with a predeterminable input signal (w (t)),
   wherein a critical frequency ($f_K$) is established or predetermined for the path (56),
   **characterised in that**,

on the basis of the critical frequency ($f_K$) a form function (14) for the jerk during activation of the drive (26, 28) is established such that,

the form function (14) is based on a basic function h(t), which has a zero point in the frequency range at the critical frequency ($f_K$),

the form function (14) is a product of a basic function and an exponential function and

the drive (26, 28) is activated on the basis of at least one such form function (14), by start times (12) being produced for the form function or for each form function (14) from a multiple differentiation of the input signal (w(t)) and start times (12) resulting therefrom of individual jerk surfaces (10).

2. Method according to claim 1, wherein the basic function describes a rectangle.

3. Method according to claim 1 or 2, wherein a width of the basic function and a width of the form function (14) are inversely proportional to the critical frequency ($f_K$).

4. Method according to claim 1, 2 or 3, wherein the drive control system (30) automatically establishes the critical frequency ($f_K$).

5. Method according to one of the preceding claims, wherein, on the basis of required values (52) of a user program, input signals w(t), and for these, start times (12) for the form functions (14) are established by multiple differentiation and wherein the form functions (14) are used as from their respective start times (12) for activation of the drive (26, 28).

6. Method according to claim 5, wherein a height of the form function (14) is reduced if upper jerk limits are exceeded, in that the form function (14) is selected so that said function is based on a basic function h(t), which has a higher-order zero point in the frequency range at the critical frequency ($f_K$).

7. Computer program with program code means for carrying out all steps of any one of claims 1 to 6 when the program is executed on a control device for an internal combustion engine.

8. Computer program product with program code means which are stored on a computer-readable data medium, for carrying out all steps of any one of claims 1 to 6 when the computer program product is executed by a drive control system (30) for a machine tool (16).

9. Drive control system (30) for a machine tool (16) with a processing unit (34) and a memory (32), into which a computer program according to claim 7 is loaded as a control program (36), which is executed during operation of the drive control system (30) by the processing unit (34).

**Revendications**

1. Procédé pour faire fonctionner un système ( 30 ) de commande d'entraînement,
qui commande un entraînement ( 26, 28 ) dans une section ( 56 ) comprenant l'entraînement ( 26, 28 ) suivant un signal ( w( t ) ) d'entrée pouvant être donné à l'avance,
dans lequel on détermine ou on donne à l'avance une fréquence ( $f_K$ ) critique pour la section ( 56 ),
**caractérisé,**
**en ce qu'**au moyen de la fréquence ( $f_K$ ) critique, on détermine une fonction ( 14 ) de forme pour la suraccélération lors de la commande de l'entraînement ( 26, 28 ) de manière à ce que la fonction ( 14 ) de forme repose sur une fonction h( t ) fondamentale qui a, dans la plage de fréquence, un point zéro à la fréquence ( $f_K$ ) critique,
**en ce que** la fonction ( 14 ) de forme est un produit d'une fonction fondamentale par une fonction exponentielle, et
**en ce qu'**on effectue une commande de l'entraînement ( 26, 28 ) sur la base d'au moins une fonction ( 14 ) de forme de ce genre en obtenant des instants ( 12 ) de début pour la ou pour chaque fonction ( 14 ) de forme à partir d'une différentiation multiple du signal ( w( ( t ) ) d'entrée et d'instants ( 12 ) qui s'en suivent de début de surfaces ( 10 ) de suraccélération individuelles.

2. Procédé suivant la revendication 1, dans lequel la fonction fondamentale décrit un rectangle.

3. Procédé suivant la revendication 1 ou 2, dans lequel une largeur de la fonction fondamentale et une largeur de la fonction ( 14 ) de forme est inversement proportionnelle à la fréquence ( $f_K$ ) critique.

**4.** Procédé suivant la revendication 1, 2 ou 3, dans lequel le système ( 30 ) d'entraînement détermine automatiquement la fréquence ( $f_K$ ) critique.

**5.** Procédé suivant l'une des revendications précédentes, dans lequel on détermine, au moyen ( 52 ) de valeurs de consigne d'un programme d'utilisateur, des signaux w( t ) d'entrée et pour ceux-ci, par différentiation multiple, des instants ( 12 ) de début des fonctions ( 14 ) de forme et dans lequel on utilise les fonctions ( 14 ) de forme à partir de leurs instants ( 12 ) de début respectifs pour la commande de l'entraînement ( 26, 28 ).

**6.** Procédé suivant la revendication 5, dans lequel, si des limites supérieures de suraccélération sont dépassées, on réduit une hauteur de la fonction ( 14 ) de forme en choisissant la fonction ( 14 ) de forme de manière à ce qu'elle repose sur une fonction h( ( t ) fondamentale qui a, dans la plage de fréquence, un ordre plus élevé qu'un point zéro à la fréquence ( $f_K$ ) critique.

**7.** Programme d'ordinateur ayant des moyens de code de programme pour effectuer tous les stades de chacune de l'une quelconque des revendications 1 à 6, lorsque le programme est exécuté sur un appareil de commande pour moteur à combustion interne.

**8.** Produit de programme d'ordinateur ayant des moyens de code de programme, qui sont mémorisés sur un support de données pouvant être sorti sur un ordinateur pour effectuer le procédé suivant chacune de l'une quelconque des revendications 1 à 6, lorsque le produit de programme d'ordinateur est réalisé par un système ( 30 ) de commande d'entraînement d'une machine ( 16 ) de traitement.

**9.** Système ( 30 ) de commande d'entraînement d'une machine ( 16 ) de traitement comprenant une unité ( 34 ) de traitement et une mémoire ( 32 ), dans laquelle est chargé comme programme ( 36 ) de commande un programme d'ordinateur suivant la revendication 7 qui, lorsque le système ( 30 ) de commande d'entraînement est en fonctionnement, est exécuté par l'unité de traitement.

# FIG 1

Stand der Technik

FIG 2

FIG 3

FIG 4

$f_k$

## FIG 5

# FIG 6

| Generierung der Sollwerte | ~50 |

⇩ ~52

| g(t) ⌐14 | ~54 |

⇩

| Strecke | ~56 |

## FIG 7

$f_k$ und d — 60

14 — 62

w(t) — 64

52

50

12   12   12 — 66

12 — 68

14   14   14   14
12   12   12

52

y(t)

44

40   42

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10063722 C2
- DE 10200680 B4

- EP 1465034 A